(19) Europäisches Patentamt
European Patent Office
Office européen des brevets

(11) **EP 2 677 162 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(51) Int Cl.:
**F02N 15/04** *(2006.01)*

(21) Anmeldenummer: **13173149.9**

(22) Anmeldetag: **21.06.2013**

(54) **Startvorrichtung zum Starten von Brennkraftmaschinen**

Starting device for starting combustion engines

Dispositif de démarrage pour le démarrage de moteurs à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2012 DE 102012210540**

(43) Veröffentlichungstag der Anmeldung:
**25.12.2013 Patentblatt 2013/52**

(73) Patentinhaber: **SEG Automotive Germany GmbH
70499 Stuttgart (DE)**

(72) Erfinder:
• **Meinheit, Hinrich
74354 Besigheim (DE)**
• **Fein, Mathias
74354 Besigheim-Ottmarsheim (DE)**
• **Maier, Uwe
75233 Tiefenbronn (DE)**
• **Leister, Jens
71636 Ludwigsburg (DE)**
• **Lees, Thomas
71696 Moeglingen (DE)**

(74) Vertreter: **Steinbauer, Florian et al
Dehns Germany
Theresienstraße 6-8
80333 München (DE)**

(56) Entgegenhaltungen:
EP-A2- 1 357 287      DE-A1- 3 225 957
FR-A1- 2 803 345      FR-A1- 2 829 812
KR-A- 20110 072 188   US-A- 5 905 309

## Beschreibung

Stand der Technik

Aus der DE 32 25 957 A1 ist eine Startvorrichtung bekannt, die zwischen einem Startermotor und einem Ritzel ein Planetengetriebe als eine Ausführungsform eines Umlaufgetriebes aufweist. Das Planetengetriebe hat ein Hohlrad, das über Dämpfungselemente in einem Hohlradlager abgestützt ist.

Veränderte Verwendungen von Startvorrichtungen erfordern nunmehr Änderungen an der Dämpfung des Hohlrades.

Aus der KR 2011 0072188 A ist ein Starter bekannt, bei dem zwischen Kupplungselementen von Hohlrad und Hohlradlager ein Dämpfer gelagert ist. Dieser Dämpfer wird an beiden Enden nach radial innen mit Kraft beaufschlagt.

Aus DE 32 25 957 A1 (D2) zeigt ist ein Starter bekannt, bei dem auch ein Dämpfer wird an beiden Enden nach radial innen mit Kraft beaufschlagt wird. Der Dämpfer ist aber zwischen zwei Kupplungselementen des Hohlradlager gelagert.

Weitere Starter mit Dämpfungselementen sind aus der FR 2 829 812 A1, der EP 1 357 287 A2, der US 5 905 309 A sowie de FR 2 803 345 A1 bekannt.

Offenbarung der Erfindung

Der Erfindung liegt die Aufgabe zugrunde, die Dämpfer zwischen dem Hohlrad und dem Hohlradlager so anzuordnen, dass die mechanische Belastung der Dämpfer verringert und dadurch die Dauerhaltbarkeit der Dämpfer vergrößert wird.

Diese Aufgabe wird erfindungsgemäß mit den Merkmalen des Anspruchs 1 gelöst. Die Unteransprüche geben zweckmäßige Weiterbildungen an.

Wird eine Kraftübertragungsfläche an einem Kupplungselement am Hohlrad und/oder am Hohlradlager derart angeordnet, dass deren Senkrechte eine Komponente aufweist, die von einem Spalt weg weist, so wird erreicht, dass beim Komprimieren des Dämpfers dieser nicht so belastet wird, dass der Dämpfer bzw. Bereiche dieses Dämpfers in den Spalt zwischen Hohlrad und Hohlradlager eindringen bzw. ein Eindringen vermieden wird. Ein Eindringen des Dämpfers in den Spalt hätte zur Folge, dass kleine Bereiche des Dämpfers stark gequetscht und so Spannungszustände im Dämpfer erreicht würden, die zumindest teilweise zu dessen Zerstörung führen würden. Zudem wäre der Dämpfer hohen Relativgeschwindigkeiten zwischen den Teilen ausgesetzt, was weitere Scherspannungen erzeugen würde. Es entstünden Dämpferbrösel, die unter Umständen die Relativdrehung zwischen Hohlrad und Hohlradlager erschweren. Die Dämpferbrösel könnten zudem auch in die Verzahnung des Umlaufgetriebes eindringen und so den Antrieb des Ritzels erschweren, da damit erhöhte Reibungswiderstände zwischen dem Startermotor und dem Ritzel entstünden.

Zur Vermeidung von zu großen Relativgeschwindigkeiten an der Oberfläche des Dämpfers ist vorgesehen, dass ein Dämpfer an einer Kraftübertragungsfläche derart angeordnet ist, dass der Dämpfer an einer zur Kraftübertragungsfläche benachbarten Fläche anliegt (unmittelbar oder mittelbar benachbart). Es ergibt sich somit eine definierte Lage des Dämpfers.

Gemäß einer bevorzugten Ausführungsform ist vorgesehen, dass die Kraftübertragungsfläche und die benachbarte Fläche am selben Bauteil einen Winkel einschließen, der kleiner als 90 Winkelgrade ist.

Eine weitere Maßnahme zur Sicherstellung, dass ein Dämpfer von einem Spalt beabstandet gehalten wird, besteht darin, einen Abstandshalter so zu positionieren, dass der Dämpfer entsprechend gehalten wird.

Zur Vergrößerung eines Verdrehungswinkels bzw. zur Einrichtung eines Verdrehungswinkels, der nahezu bzw. gar nicht gedämpft ist, ist vorgesehen, dass in einer Ruhelage zwischen einer Kraftübertragungsfläche und dem Dämpfer ein Zwischenraum ohne Dämpfer bzw. mit Luft angeordnet ist.

Eine Dämpfung ist in zwei verschiedene Richtungen möglich und auch vorgesehen -jedoch nicht zwingend - so dass zur Vereinfachung der Montage eine Art Dämpferbaugruppe verwendet wird, bei der der eine Dämpfer über einen Verbindungsabschnitt einstückig mit einem weiteren Dämpfer verbunden ist. Hierzu ist vorgesehen, dass sich der Verbindungsabschnitt in einem Spalt zwischen dem Hohlrad und dem Hohlradlager erstreckt. Der Spalt kann dazu beispielsweise in radialer Richtung zwischen einem Kupplungselement des Hohlradlagers und einem Kupplungselement des Hohlrades oder alternativ auch in radialer Richtung zwischen einem Kupplungselement des Hohlrades und dem Hohlradlager angeordnet sein. Die beiden zuletzt vorgestellten Möglichkeiten sind vor allem für Anordnungen geeignet, bei denen sich der Aufbau in radialer Richtung erstreckt (Hohlrad - Dämpfer - Hohlradlager). Für den Fall, dass sich das Hohlrad, das Hohlradlager und der Dämpfer im Starter in axialer Richtung angeordnet wiederfinden, ist vorgesehen, dass sich der Spalt in entsprechender Weise in axialer Richtung zwischen dem Hohlrad und dem Hohlradlager befindet. Die letztgenannte Variante ist vor allem dann von Vorteil, wenn der Bauraum in radialer Richtung so sehr begrenzt ist, dass die entsprechende Anordnung nicht oder nur mit Nachteilen verwendet werden kann.

Zur Vermeidung von unvorteilhaften Einbauvarianten ist vorgesehen, dass der Verbindungsabschnitt im Spalt außermittig angeordnet ist und/oder unsymmetrisch ausgeführt ist. Bei einer derartigen Ausführung und entsprechenden Gegenflächen bzw. Aussparungen im Spalt kann erreicht werden, dass der Verbindungsabschnitt nur in einer Position passend in den Spalt eingebracht werden kann. Dies ist insofern von Bedeutung, als dass es Startvorrichtungen mit unterschiedlichen Drehrichtungen gibt und demzufolge die Dämpfung auch in unterschiedliche Drehrichtung unterschiedlich ausgeführt sein kann.

Bezüglich des Verbindungsabschnitts kann vorgesehen sein, dass dieser an der Übergangsstelle zum eigentlichen Dämpfer eben diesen Dämpfer stützt und somit den Dämpfer bzw. den Dämpferabschnitt vom Spalt aktiv wegdrückt.

Gemäß einer weiteren Ausgestaltung der Erfindung ist vorgesehen, dass sich der Dämpfer und der weitere Dämpfer zwischen zwei Kupplungselementen des Hohlrades oder des Hohlradlagers erstrecken. Liegt der Dämpfer an der vom Spalt abgewandten Fläche an und ist zwischen der der abgewandten Fläche gegenüberliegenden Fläche und dem Dämpfer ein vorzugsweise leerer Zwischenraum, so wird erreicht, dass ggf. erst bei sehr starker Komprimierung des Dämpfers in Umfangsrichtung erreicht wird, dass dieser sich in den Spalt hineindrückt oder ggf. dies gar nicht erreicht wird.

Wie bereits angeordnet, kann der Dämpfer sowohl in axialer oder radialer Richtung zwischen dem Hohlrad und dem Hohlradlager angeordnet sein.

In den Figuren sind verschiedene Ausführungsbeispiele dargestellt. Es zeigen:

Figur 1                einen Längsschnitt durch eine Startvorrichtung,

Figur 2                einen Schnitt durch das Umlaufgetriebe aus Figur 1,

Figur 3                einen vergrößerten Teilschnitt aus Figur 2 mit eingezeichneter senkrechter und radialer Komponente an einem Kupplungselement,

Figur 3a               eine Darstellung der senkrechten und radialen Komponente an einem anderen Kupplungselement,

Figur 4                eine Einbausituation eines Dämpfers mit eingebautem Zwischenraum,

Figur 5                eine ausschnittweise Darstellung einer Dämpferanordnung in axialer Richtung,

Figur 6 bis Figur 10b  verschiedene Ausführungsvarianten für über einen Verbindungs-steg zusammenhängende Dämpfer.

In den Figuren sind gleiche Bauteile mit gleichen Bezugszeichen versehen.

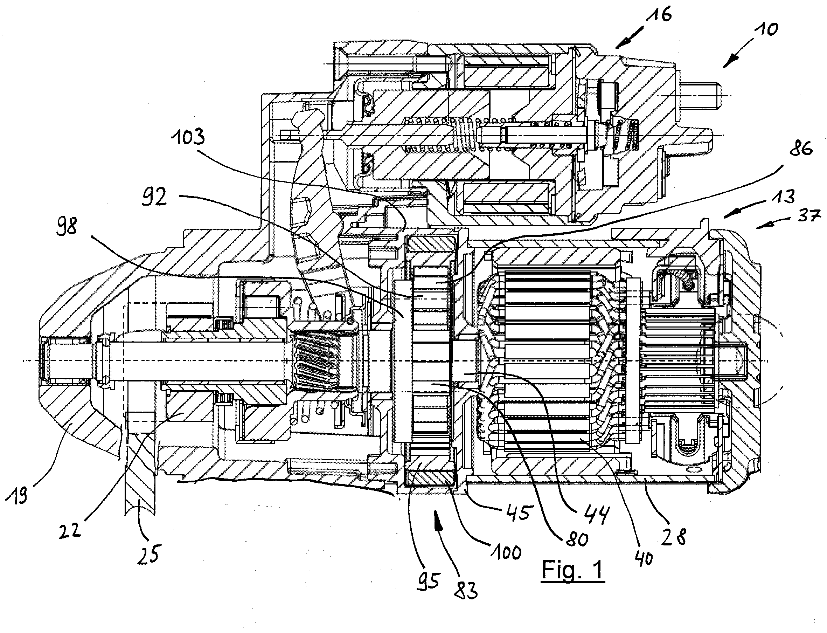

Figur 1 zeigt eine Startvorrichtung 10 zum Starten von Brennkraftmaschinen in einem Längsschnitt. Diese Startvorrichtung 10 weist beispielsweise einen Startermotor 13 und einen Vorspuraktuator 16 auf, der beispielsweise ein bekanntes Relais bzw. Starterrelais ist. Der Startermotor 13 und der elektrische Vorspuraktuator 16 sind an einem gemeinsamen Antriebslagerschild 19 befestigt. Der Startermotor 13 dient funktionell dazu ein Ritzel 22 anzutreiben, wenn es im Zahnkranz 25, der hier nicht dargestellten Brennkraftmaschine, eingespurt ist. Der Startermotor 13 weist als ein Gehäuseteil ein Polrohr 28 auf, das an seinem Innenumfang Permanentmagnete trägt. Die Permanentmagnete umgeben einen Anker 37, der ein aus Lamellen 40 aufgebautes Ankerpaket und eine in Nuten angeordnete Ankerwicklung aufweist. Eine Antriebswelle 44 ist in Richtung zum Ritzel 22 in einem Zwischenlager 45 gelagert. Zwischen dem Ritzel und dem Anker 37 befindet sich ein als Planetengetriebe ausgeführtes Umlaufgetriebe 83. Zentral und auf der Antriebswelle 44 sitzend bzw. mit dieser in Drehmoment übertragender Weise verbunden ist ein Sonnenrad 80, das über seinen verzahnten Umfang insgesamt drei Planetenräder 86 antreibt. Die Planetenräder 86 wälzen sich an einem Hohlrad 95 ab. Die Planetenräder 86 sind auf Achszapfen 92 gelagert, die mit einem Planetenträger 98 drehfest verbunden sind.

Das Hohlrad 95 ist über zumindest einen Dämpfer 100 in einem Hohlradlager drehbar bzw. verschwenkbar gelagert. Das Hohlradlager wird manchmal auch als Zwischenlager bezeichnet und ist zwischen dem Antriebslagerschild 19 und dem Polrohr 28 angeordnet.

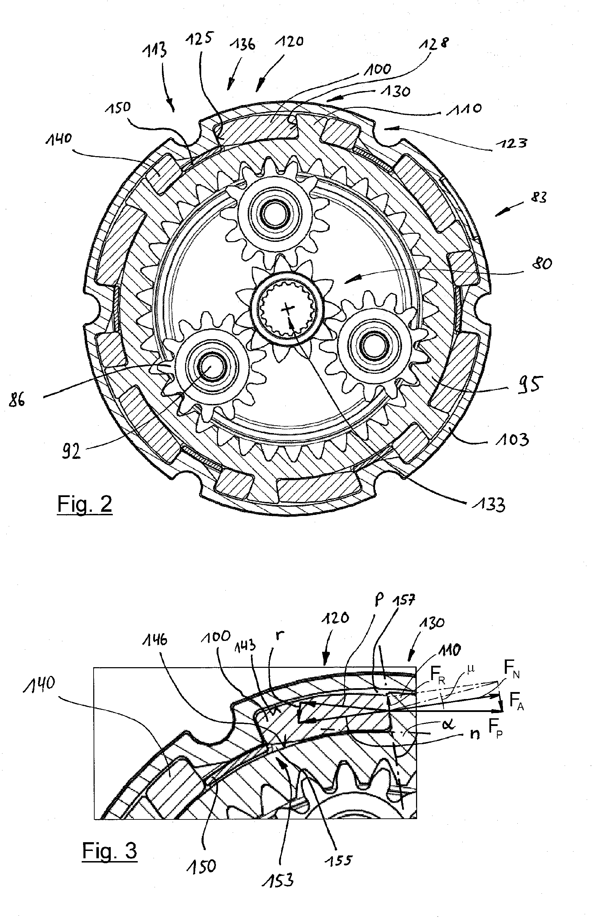

Wie in Figur 2 erkannt werden kann, ist das Hohlrad 95 an seinem Außenumfang mit mehreren - hier sechs - sich nach radial außen erstreckenden Kupplungselementen 110 ausgestattet. Prinzipiell würde mindestens eines dieser Kupplungselemente 110 ausreichen. Auch das Hohlradlager 103 hat in diesem Fall an einem Innenumfang sechs Kupplungselemente 113 angeordnet, auch hier würde mindestens eines ausreichen. Es ist hier somit ein Kupplungselement 110 des Hohlrades 95 zwischen zwei Kupplungselementen 113 des Hohlradlagers 103 angeordnet. Gleiches gilt auch umgekehrt.

Ausgehend von einem Kupplungselement 110 des Hohlrades 95 existieren in Umfangsrichtung und zwar sowohl in die eine als auch in die andere Umfangsrichtung je ein Zwischenraum 120 und 123. Der Zwischenraum 120 ist in diesem Fall größer als der Zwischenraum 123. In dem Zwischenraum 120 ist der Dämpfer 100 eingesetzt. Dieser Dämpfer 100 ist dabei zwischen einer Kraftübertragungsfläche 125 am Hohlradlager und einer Kraftübertragungsfläche 128 am Hohlrad 95 eingesetzt und dort gelagert.

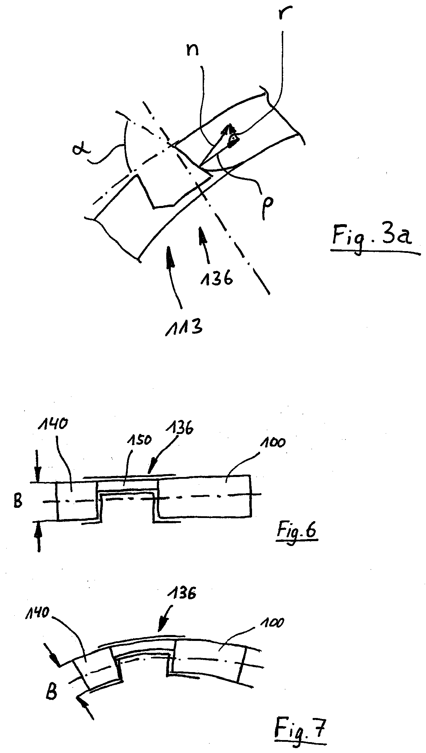

Wie in Figur 3 dargestellt ist, ist für die Kraftübertragungsfläche 128 am Kupplungselement 110 des Hohlrades 95 eine spezielle Bedingung skizziert. So soll eine Senkrechte n der Kraftübertragungsfläche 128 derart ausgerichtet sein, dass eine Komponente r der Senkrechten n so ausgerichtet ist, dass diese von einem Spalt 130 weg weist. Der Normalenvektor bzw. die Senkrechte n ist gemäß Figur 3 und der allgemein bekannten Vektorzerlegung hier in zwei Vektoren zerlegt, die einerseits durch die Komponente r in radialer Richtung zur Drehachse des Sonnenrades 80 gegeben ist und andererseits durch die Komponente p, die in Umfangsrichtung und damit senkrecht zur Komponente r ausgerichtet ist. Die Drehachse ist hier mit der Bezugszahl 133 bezeichnet (Figur 2). Aufgrund der Lage der Kraftübertragungsfläche 128 ergibt sich eine Komponente r, die nach radial innen gerichtet ist. Durch diese Ausrichtung nach radial innen bewirkt die Komponente r in der Folge im Betrieb und damit bei erheblichem Druck zwischen der Kraftübertragungsfläche 128 am Kupplungselement 110 und dem Dämpfer 100 eine Kraft, die nach radial innen wirkt und demzufolge von einem Spalt 130 weg weist. Vom Dämpfer 100 wird auf das Kupplungselement 110 eine Normalkraft FN bewirkt. Zu dem wirkt durch die schräge Kraftübertragungsfläche 128 eine Komponente FA. Diese Komponente FA wird in der nicht näher bezeichneten Fuge zwischen dem Dämpfer 100 und dem Kupplungselement 110 auf die Kraftübertragungsfläche 128 übertragen. Die Kraft FA wirkt auf die Kraftübertragungsfläche 128 nach radial innen. Aus der Vektoraddition der Kräfte FA und FN ergibt sich die Richtung der resultierenden Kraft FP. Der Kraft FA wirkt eine Reibungskraft FR entgegen. FR und FN stehen senkrecht aufeinander. Aus diesen beiden Kräften FR und FN lässt sich ein Reibungswinkel $\mu$ bestimmen, wobei

$$\tan \mu = FR/FN.$$

Um Selbsthemmung zwischen dem Dämpfer 100 und dem Kupplungselement 110 auszuschließen - andernfalls könnte sich der Dämpfer 100 bspw. durch Erschütterungen bedingt doch in die Nähe des Spalts 130 bewegen und in diesen hinein gequetscht werden - soll vorgesehen, dass der Dämpfer 100 von selbst am Kupplungselement 110 und die Kraftübertragungsfläche 128 entlang nach innen rutschen kann.

Für eine trockene, ungeschmierte Paarung eines Dämpfers 100 aus einem Elastomer (Gummi etc.) und dem Kupplungselement 110 aus Metall (Stahl, etc.) soll ein Wert für $\mu$ wie folgt bestimmt sein:

$$\mu \ \text{min} = 27{,}5°.$$

Für eine geschmierte Paarung eines stark mit Schmierfett benetzten Dämpfers 100 aus einem Elastomer (Gummi etc.) und dem ebenso stark mit Schmierfett benetzten Kupplungselement 110 aus Metall (Stahl, etc.) soll ein Wert für $\mu$ wie folgt bestimmt sein:

$$\mu \ \text{min} = 4{,}6°.$$

Für eine bspw. nach längerer Benutzung geschmierte Paarung eines nur noch dünn mit Schmierfett benetzten Dämpfers 100 aus einem Elastomer (Gummi etc.) und dem ebenso nur noch dünn mit Schmierfett benetzten Kupplungselement 110 aus Metall (Stahl, etc.) soll ein Wert für $\mu$ wie folgt bestimmt sein (Mischreibung):

$$\mu \ \text{min} = 14°.$$

Diese ermittelten Werte $\mu$ min bestimmen je nach Auslegung der Maschine (angenommener Schmierungszustand) die Neigung der Kraftübertragungsfläche 128. Der Winkel Alpha bzw. $\alpha$ ergibt sich als Differenz eines rechten Winkels und dem Reibungswinkel $\mu$.

So ist gemäß einer ersten bevorzugten Ausführungsform vorgesehen, dass ein Reibungswinkel $\mu$ mindestens den Winkel $\mu$min = 4,6° aufweist. Demzufolge soll ein Winkel Alpha bzw. $\alpha$ maximal 85,4° zum Radius in Richtung zur Drehachse 133 aufweisen.

Gemäß einer zweiten bevorzugten Ausführungsform ist vorgesehen, dass ein Reibungswinkel $\mu$ mindestens den Winkel $\mu$min = 14° aufweist. Demzufolge soll ein Winkel Alpha bzw. $\alpha$ maximal 76° zum Radius in Richtung zur Drehachse 133 aufweisen.

Gemäß einer dritten bevorzugten Ausführungsform ist vorgesehen, dass ein Reibungswinkel μ mindestens den Winkel μmin = 62,5° aufweist. Demzufolge soll ein Winkel Alpha bzw. α maximal 76° zum Radius in Richtung zur Drehachse 133 aufweisen.

Der Winkel μ soll mindestens 4,6° und bis zu 27,5° betragen, vorzugsweise zwischen 14° und 27,5° oder vorzugsweise zwischen 4,6° oder 14° betragen.

Es ist vorgesehen, dass sich gedachte Verlängerungen der Kraftübertragungsfläche 128 und 125 radial außerhalb der Drehachse 133 schneiden.

In Figur 3a ist die Situation für das Kupplungselement 113 dargestellt. Die Kraftübertragungsfläche 125 ist dabei zu einem Radius in Richtung zur Drehachse 133 derart geneigt, dass die Senkrechte n auf der Kraftübertragungsfläche 125 einerseits eine Komponente p in Umfangsrichtung aufweist und andererseits eine Komponente r in radialer Richtung. Die Komponente in radialer Richtung ist dabei nach radial außen gerichtet und demzufolge auch hier von einem Spalt 136 wegweisend.

Zur Vermeidung der so genannten Spaltextrusion, d. h. dem Einquetschen des Dämpfers 100 oder beispielsweise auch des weiteren Dämpfers 140, ist vorgesehen, dass zumindest an einem Kupplungselement 110, 113 zwischen dem Hohlrad 95 und dem Hohlradlager 103 eine Kraftübertragungsfläche 128, 125 derart angeordnet ist, dass deren Senkrechte n eine Komponente r aufweist, die von einem Spalt 130, 136 zwischen dem Hohlrad 95 und dem Hohlradlager 103 weg weist.

Der Spalt 130 ist hier ein Spalt zwischen einem Kupplungselement 110 am Hohlrad 95 und einem zylindrischen Innenumfang des Hohlradlagers 103. Der Spalt 136 ist ein Spalt zwischen einem Kupplungselement 113 am Hohlradlager 103 und einer zylindrischen Außenoberfläche des Hohlrades 95. Die zylindrische Innenoberfläche des Hohlradlagers 103 ist hier mit der Bezugszahl 143, die zylindrische Außenoberfläche des Hohlrads 95 ist hier mit der Bezugszahl 146 bezeichnet. In Bezug auf das Dämpfungselement 100 und seine radiale Lage kann zudem angemerkt werden, dass ein in Bezug auf das Dämpfungselement 100 eher radial außen angeordneter Spalt 130 dazu führt, dass die Komponente r an dieser Stelle (Kraftübertragungsfläche) nach radial innen gerichtet sein muss. Ist der Spalt 136 in Bezug auf das Dämpfungselement eher radial innen angeordnet, ist die Komponente r nach radial außen gerichtet. Dementsprechend hat die Senkrechte n der Kraftübertragungsfläche 128 am Hohlrad 95 eine Komponente r, die nach radial innen gerichtet ist und die Senkrechte n der Kraftübertragungsfläche 125 am Hohlradlager 103 eine Komponente r, die nach radial außen gerichtet ist.

Die hier vorgeschlagene Maßnahme für die Kraftübertragungsfläche 128 bzw. 125 am Hohlradlager 103 bzw. am Hohlrad 95 kann unabhängig voneinander am entsprechenden Kupplungselement 110 bzw. 113 vorgesehen sein. Sie muss nicht bei beiden Kraftübertragungsflächen 125, 128 gleichzeitig verwirklicht sein, es reicht zunächst die entsprechende Anordnung der Kraftübertragungsfläche 125 bzw. 128 an einem der beiden Kupplungselemente 110 bzw. 113. In diesem Fall wäre dann am jeweils anderen Kupplungselement 110 bzw. 113 eine ggf. andere Maßnahme zu ergreifen, um Spaltextrusion zu vermeiden.

Entsprechend der Schilderung zuvor, kann vorgesehen sein, dass die Kraftübertragungsfläche 125, 128 und die jeweils mittelbar oder wie hier gezeigt unmittelbar benachbarte Fläche, die hier im Beispiel einerseits die innenzylindrische Fläche 143 bzw. außenzylindrische Fläche 146 ist, am selben Bauteil, d. h. entweder am Hohlrad 95 oder am Hohlradlager 103 den Winkel Alpha bzw. α einschließen, der kleiner als 90 Winkelgrade ist.

Bezüglich der Kraftübertragungsfläche 125 und deren Neigung zu einem Radius zum Drehmittelpunkt 133 gilt im Übrigen das gleiche in analoger Weise - vor allem, wenn kein Verbindungsabschnitt 150 vorgesehen ist - wie für die Kraftübertragungsfläche 128 beschrieben. So kann also vorgesehen sein, dass der Dämpfers 100 zwischen zwei zu je einem Radius schräggestellten Kraftübertragungsflächen 125 und 128 eingeklemmt oder einklemmbar ist.

Wie beispielsweise in den Figuren 2, 3 und 3a dargestellt ist, ist vorgesehen, dass ein Dämpfer 100 an einer Kraftübertragungsfläche 125 bzw. 128 derart angeordnet ist, dass der Dämpfer 100 an einer zur Kraftübertragungsfläche 125, 128 mittelbar oder wie hier gezeigt unmittelbar benachbarten Fläche 143 bzw. 146 anliegt.

In der Figur 3 ist dargestellt, wie der Dämpfer 100 mittels eines Verbindungsabschnitts 150 mit dem zweiten Dämpfer 140 einstückig verbunden ist. Das Verbindungsmittel bzw. der Verbindungsabschnitt 150 ist so ausgebildet, dass dieser mit einem Ende in Richtung zum Dämpfer 100 als Abstandshalter 153 wirkt und somit den Dämpfer 100 von dem Spalt 136 beabstandet hält. Da in dem hier skizzierten Ausführungsbeispiel die Belastung des Dämpfers 100 deutlich größer ist als die Belastung des Dämpfers 140 beim Zurückschwingen, ist die hier eben beschriebene Maßnahme mit dem Abstandshalter 153 dort nicht vorgesehen. Sollte jedoch ein Dämpfer 140 auch beim Rückschwingen so stark belastet werden, dass dort eine Spaltextrusion beispielsweise ebenfalls durch einen Abstandshalter vermieden werden könnte, so wäre dies in analoger Weise auch beim Dämpfer 140 möglich. Der Abstandshalter 153 bewirkt, dass das zum Kupplungselement 113 gerichtete Ende des Dämpfers 100 von der Außenoberfläche 146 des Hohlrads 95 unter Ausbildung eines Hohlraums 155 zwischen dem Dämpfer 100 und dem Hohlrad 95 ferngehalten wird. Die Formgebung des Dämpfers 100 ist zudem so, dass sich in der Nachbarschaft des Spalts 130, neben dessen Mündung, wo sich das Kupplungselement 110, der Dämpfer 100 und die innenzylindrische Fläche 143 befinden, ein weiterer Hohlraum 157 befindet. Es ist demnach vorgesehen, dass der Dämpfer 100 an der von dem Spalt 130, 136 entfernten Fläche 146, 143 anliegt und zwischen der dem Spalt 130, 136 gegenüberliegenden Fläche 143, 146 und dem Dämpfer 100 ein Hohlraum 157, 155 ist.

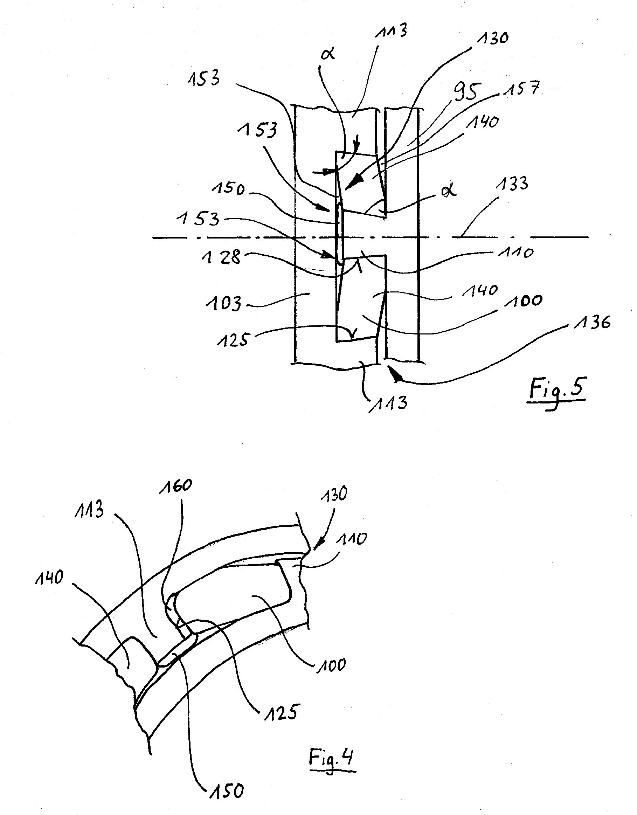

In Figur 4 ist in einer weiteren Variante zur Darstellung beispielsweise in Figur 3 dargestellt, wie zwischen dem Dämpfer 100 und dem Kupplungselement 113 und damit zur Kraftübertragungsfläche 125 hin im zunächst unbelasteten Zustand zwischen dem Dämpfer 100 und dem Kupplungselement 113 ein leerer Zwischenraum 160 angeordnet ist.

In Figur 5 ist eine Variante zu dem vorgenannten Beispiel bzw. den davon abgeleiteten Varianten dargestellt. Während gemäß den Figuren 1 bis 4 der beschriebene Aufbau zwischen Hohlrad 95, Dämpfern 100 bzw. 140 und Hohlradlager 103 in radialer Richtung aufgebaut ist, kann dieser Aufbau ebenso auch in axialer Richtung erfolgen, so dass sich der Dämpfer 100 in axialer Richtung zwischen dem Hohlrad 95 und dem Hohlradlager 103 befindet. Figur 5 zeigt dementsprechend eine beispielhafte Sicht von radial außen auf ein Hohlrad 95 mit einem Kupplungselement 110, einem Dämpfer 100 und einem Dämpfer 140. Die linke Seite ausschnittweise ein Hohlradlager 103, das wie das Hohlrad 95 ebenfalls Kupplungselemente 113 hat. Die beiden Dämpfer 100 und 140 sind auch hier durch einen Verbindungsabschnitt 150 einstückig verbunden. Das Ausführungsbeispiel nach Figur 5 kann in verschiedenen Einzelheiten genauso variiert werden, wie dies auch bei vorgenannten Ausführungsbeispielen und dessen Varianten geschehen ist: so kann pro Dämpfer 100 bzw. 140 die gemäß dem ursprünglichen Anspruch 1 beschriebene Anordnung nur auf einer Seite realisiert sein, was auch für den Winkel zwischen der Kraftübertragungsfläche 125, 128 und der benachbarten Fläche, die hier lediglich kreisringförmig ist, gilt. Der Dämpfer 100 bzw. 140 liegt auch hier an einer zur Kraftübertragungsfläche 125, 128 benachbarten Fläche an. In Figur 5 ist nicht nur ein Abstandshalter 153 gezeigt, sondern zwei Abstandshalter 153, die letztlich durch den Verbindungsabschnitt 150 realisiert sind. Der Verbindungsabschnitt 150 ist wie zuvor in einem Spalt 130 angeordnet und könnte alternativ auch im Spalt 136 angeordnet sein. Ebenso sind hier Hohlräume 153, 157 realisiert, die analog zu den vorherigen Beispielen angeordnet sind. Auch für dieses Ausführungsbeispiel gelten die bereits zu Figur 3 geäußerten Bedingungen für den Winkel $\mu$. Der Winkel $\mu$ wird hier jedoch nicht gegen einen Radius gemessen, sonder gegen eine Ebene, die die Drehachse 133 ihrer Länge nach schneidet und hier nicht eingezeichnet ist. Die Drehachse 133 ist in Figur 5 zwar in der Blattebene liegend; dies ist jedoch eine Seitenansicht, so dass die Drehachse 133 tatsächlich räumlich entfernt vom Kupplungselement 110 bzw. 113 liegt.

In den nachfolgenden Figuren sind ein paar Ausführungsbeispiele für verschiedene Kombinationen aus Dämpfer 100 und Dämpfer 140 dargestellt.

In Figur 6 ist beispielsweise eine Draufsicht von radial außen auf eine solche Dämpferkombination dargestellt, wie sie beispielsweise bei einer radialen Anordnung von Hohlrad 95, Dämpfern 100, 140 und Hohlradlager 103 vorgesehen sein könnte. Der Spalt 136 ist hier lediglich durch Konturen angedeutet und zeigt, dass der Verbindungsabschnitt 150 unsymmetrisch angeordnet ist. Dies hat den Vorteil, dass durch eine derartige Asymmetrie eine Fehlpositionierung der Dämpferkombination im Spalt 136 sofort erkannt werden kann (Montageüberwachung).

Figur 7 zeigt ebenso eine unsymmetrische bzw. außermittige Anordnung des Verbindungsabschnitts 150 im Spalt 136. Hier jedoch hin einer Anordnung, wie sie beispielsweise für die Anordnung gemäß Figur 5 vorgesehen sein könnte. Die beiden Verbindungsabschnitte 150 gemäß Figur 6 und Figur 7 sind jeweils außermittig und gleichzeitig unsymmetrisch ausgeführt. Die nachfolgenden Ausführungsbeispiele sind für eine radiale Anordnung, wie zu Figur 1 bis 4 beschrieben, vorgesehen, können jedoch für eine axiale Anordnung von einem Fachmann oh-ne Weiteres adaptiert werden.

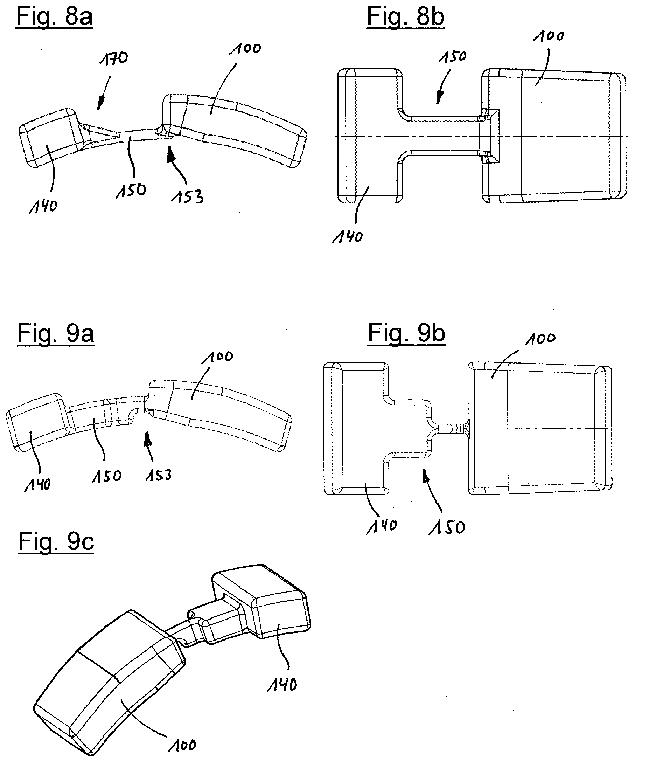

Das Ausführungsbeispiel nach Figur 8a und 8b zeigt zwei Dämpfer 100 und 140, die mit einem Verbindungsabschnitt 150 verbunden sind. Der Verbindungsabschnitt 150 hat hier eine keilförmige Kontur 170, die zu einer unsymmetrischen Anordnung des Verbindungsstegs 150 führt und demzufolge sicherstellen kann, dass die Dämpferkombination bei entsprechender Profilierung eines Kupplungselements bzw. des Spalts eine eindeutige Lagepositionierung ermöglicht und dadurch einen Falscheinbau sofort erkennbar macht, weil eine Montage von weiteren Bauteilen an dieser Stelle nicht mehr möglich ist. Beispielsweise könnte es an dieser Stelle sein, dass das Zwischenlager 45 nicht mehr montiert werden könnte. Figur 8b macht deutlich, dass der Verbindungabschnitt 150 zwar mittig angeordnet ist, jedoch dennoch unsymmetrisch ist.

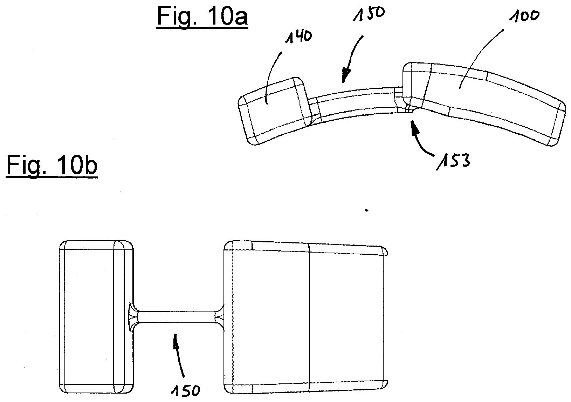

In Figur 9a und 9b ist ein weiteres Ausführungsbeispiel von im Grunde genommen zwei im Vergleich mit Figur 8a und 8b gleichen Dämpfern 100 und 140 gezeigt, die jedoch durch einen unterschiedlichen Verbindungsabschnitt 150 verbunden sind. Der Verbindungsabschnitt 150 ist über in etwa eine Hälfte seiner Länge halb so breit wie ein Dämpfer 140. Im Anschluss daran ist der Verbindungsabschnitt 150 in etwa auf ein Zehntel der Breite eines Dämpfers reduziert. Figur 9c zeigt eine räumliche Ansicht des Ausführungsbeispiels aus Figur 9a und 9b. Das Ausführungsbeispiel einer Dämpferkombination aus Dämpfer 100 und Dämpfer 140 mit einem Verbindungsabschnitt 150 gemäß Figur 10a und 10b zeigt einen einfachen symmetrischen Verbindungsabschnitt 150 mit einem Abstandshalter 153. Der Verbindungsabschnitt hat in etwa ein Zehntel der Breite der Dämpfer 100, 140.

**Patentansprüche**

1. Startvorrichtung (10) zum Starten von Brennkraftmaschinen, mit einem Startermotor (13) und einem Ritzel (22), welches durch den Startermotor (13) angetrieben werden kann, wobei zwischen dem Startermotor (13) und dem Ritzel (22) ein Umlaufgetriebe (83) mit einem Hohlrad (95) angeordnet ist, das Hohlrad (95) drehbar an einem Hohlradlager (103) abgestützt ist und hierbei eine Abstützung über mindestens einen Dämpfer (100) erfolgt, welcher zwischen einer Kraftübertragungsfläche (125) eines Kupplungselements (113) des Hohlradlagers (103) und einer Kraftübertragungsfläche (128) eines Kupplungselements (110) des Hohlrads (95) gelagert ist, **dadurch gekennzeichnet, dass** die Kraftübertragungsfläche (125) des Kupplungselements (113) des Hohlradlagers (103) derart angeordnet ist, dass deren Senkrechte (n) eine Komponente (r) aufweist, die von einem Spalt (136) zwischen dem Kupplungselement (113) des Hohlradlagers (103) und einer zylindrischen Außenoberfläche (146) des Hohlrads (95) weg weist.

2. Startvorrichtung (10) nach Anspruch 1, **dadurch gekennzeichnet, dass** die Kraftübertragungsfläche (125; 128) und eine zylindrische Außenoberfläche (146) des Hohlrads und/oder eine zylindrische Innenoberfläche (143) des Hohlradlagers einen Winkel (Alpha) einschließen, der kleiner als 90 Winkelgrade ist.

3. Startvorrichtung (10) nach Anspruch 1 oder 2, **dadurch gekennzeichnet, dass** die Kraftübertragungsfläche (125; 128) so zu einem zu einer Drehachse (133) gerichteten Radius um einen Winkel ($\mu$) geneigt ist, dass zwischen dem Dämpfer (100) und dem Kupplungselement (10, 113) keine Selbsthemmung auftritt.

4. Startvorrichtung (10) nach Anspruch 3, **dadurch gekennzeichnet, dass** der Winkel ($\mu$) mindestens 4,6° und bis zu 27,5° beträgt, vorzugsweise zwischen 14° und 27,5° oder vorzugsweise zwischen 4,6° oder 14° beträgt.

5. Startvorrichtung (10) nach einem der vorstehenden Ansprüche, **dadurch gekennzeichnet, dass** ein Dämpfer (100, 140) an einer Kraftübertragungsfläche (125, 128) derart angeordnet ist, dass der Dämpfer (100, 140) an einer zylindrischen Außenoberfläche (146) des Hohlrads oder einer zylindrischen Innenoberfläche (143) des Hohlradlagers anliegt.

6. Startvorrichtung (10) einem der vorstehenden Ansprüche, **dadurch gekennzeichnet, dass** ein Dämpfer (100, 140) durch einen Abstandshalter (153) von einem Spalt (136) beabstandet gehalten wird.

7. Startvorrichtung (10) nach einem der vorstehenden Ansprüche, **dadurch gekennzeichnet, dass** der Dämpfer (100) über ein Verbindungsabschnitt (150) einstückig mit einem weiteren Dämpfer (140) verbunden ist.

8. Startvorrichtung (10) nach Anspruch 7, **dadurch gekennzeichnet, dass** sich der Verbindungsabschnitt (150) in einem Spalt (130, 136) zwischen dem Hohlrad (95) und dem Hohlradlager (103) erstreckt.

9. Startvorrichtung (10) nach Anspruch 8, **dadurch gekennzeichnet, dass** der Verbindungsabschnitt (150) im Spalt (130, 136) außermittig angeordnet ist und/oder unsymmetrisch ausgeführt ist.

10. Startvorrichtung (10) nach Anspruch 7, 8 oder 9, **dadurch gekennzeichnet, dass** der Verbindungsabschnitt (150) den Dämpfer (100, 140) stützt.

11. Startvorrichtung (10) nach einem der Ansprüche 7 bis 10, **dadurch gekennzeichnet, dass** sich der Dämpfer (100) und der weitere Dämpfer (140) zwischen zwei Kupplungselementen (110) des Hohlrades (95) oder des Hohlradlagers (103) erstrecken.

12. Startvorrichtung (10) nach einem der vorstehenden Ansprüche, **dadurch gekennzeichnet, dass** der Dämpfer (100) an der von dem Spalt (130, 136) entfernten Fläche (146, 143) anliegt und zwischen der dem Spalt (130, 136) gegenüberliegenden Fläche (143, 146) und dem Dämpfer (100) ein Hohlraum (157, 155) ist.

13. Startvorrichtung (10) nach einem der vorstehenden Ansprüche, **dadurch gekennzeichnet, dass** sich der Dämpfer (100) in axialer oder radialer Richtung zwischen dem Hohlrad (95) und dem Hohlradlager (103) befindet.

**Claims**

1. Starting device (10) for starting internal combustion engines, with a starter motor (13) and a pinion (22) which can be driven by the starter motor (13), wherein a revolving gear (83) with a ring gear (95) is arranged between the starter motor (13) and the pinion (22), the ring gear (95) being rotatably supported on a ring gear bearing (103), wherein a support is effected via at least one damper (100), which is interposed between a force transmission surface (125) of a coupling element (113) of the ring gear bearing (103) and a force transmission surface (128) of a coupling element (110) of the ring gear (95), **characterized in that** the force transmission surface (125) of the coupling element (113) of the ring gear bearing (103) is arranged such that its vertical (n) comprises a component (r) which points away from a gap (136) between the coupling element (113) of the ring gear bearing (103) and a cylindrical outer surface (146) of the ring gear (95).

2. Starting device (10) according to claim 1, **characterized in that** the force transmitting surface (125; 128) and a cylindrical outer surface (146) of the ring gear and/or a cylindrical inner surface (143) of the ring gear bearing confine an angle (alpha) smaller than 90 degrees.

3. Starting device (10) according to claim 1 or 2, **characterized in that** the force transmission surface (125; 128) is inclined by an angle ($\mu$) to a radius directed to an axis of rotation (133) such that no self-locking occurs between the damper (100) and the coupling element (110, 113).

4. Starting device (10) according to claim 3, **characterized in that** the angle ($\mu$) is at least 4.6° and up to 27.5°, preferably between 14° and 27.5° or preferably between 4.6° or 14°.

5. Starting device (10) according to any one of the preceding claims, **characterized in that** a damper (100, 140) is arranged on a force transmission surface (125, 128) in such a way that the damper (100, 140) bears against a cylindrical outer surface (146) of the ring gear or a cylindrical inner surface (143) of the ring gear bearing.

6. Starting device (10) according to any one of the preceding claims, **characterized in that** a damper (100, 140) is kept spaced from a gap (136) by a spacer (153).

7. Starting device (10) according to any one of the preceding claims, **characterized in that** the damper (100) is integrally connected to a further damper (140) via a connecting section (150).

8. Starting device (10) according to claim 7, **characterized in that** the connecting section (150) is positioned in a gap (130, 136) between the ring gear (95) and the ring gear bearing (103).

9. Starting device (10) according to claim 8, **characterized in that** the connecting section (150) in the gap (130, 136) is arranged eccentrically and/or realised asymmetrically.

10. Starting device (10) according to claim 7, 8 or 9, **characterized in that** the connecting section (150) supports the damper (100, 140).

11. Starting device (10) according to any of claims 7 to 10, **characterized in that** the damper (100) and the further damper (140) extend between two coupling elements (110) of the ring gear (95) or the ring gear bearing (103).

12. Starting device (10) according to any one of the preceding claims, **characterized in that** the damper (100) bears against the surface (146, 143) remote from the gap (130, 136) and a cavity (157, 155) is between the surface (143, 146) opposite the gap (130, 136) and the damper (100).

13. Starting device (10) according to any one of the preceding claims, **characterized in that** the damper (100) is located in an axial or radial direction between the ring gear (95) and the ring gear bearing (103).


**Revendications**

1. Dispositif de démarrage (10) pour le démarrage de moteurs à combustion interne, comportant un moteur de démarreur (13) et un pignon (22) qui peut être entraîné par le moteur de démarreur (13), dans lequel un engrenage planétaire (83) pourvu d'une couronne (95) est agencé entre le moteur de démarreur (13) et le pignon (22), la couronne (95) est supportée en rotation par un palier de couronne (103) et fournit ainsi un appui par le biais d'au moins un amortisseur (100) qui est monté entre une surface de transmission de puissance (125) d'un élément d'accouplement (113) du palier de couronne (103) et une surface de transmission de puissance (128) d'un élément d'accouplement (110) de la couronne (95), **caractérisé en ce que** la surface de transmission de puissance (125) de l'élément d'accouplement (113) du palier de couronne (103) est agencée de telle sorte que sa normale (n) a une composante (r) qui est dirigée en s'éloignant d'un interstice (136) entre l'élément d'accouplement (113) du palier de couronne (103) et une surface extérieure cylindrique (146) de la couronne (95).

2. Dispositif de démarrage (10) selon la revendication 1, **caractérisé en ce que** la surface de transmission de puissance (125 ; 128) et une surface extérieure cylindrique (146) de la couronne et/ou une surface intérieure cylindrique (143) du palier de couronne définissent un angle (alpha) qui est inférieur à 90 degrés.

3. Dispositif de démarrage (10) selon la revendication 1 ou 2, **caractérisé en ce que** la surface de transmission de puissance (125 ; 128) est inclinée par rapport à un rayon dirigé vers un axe de rotation (133) d'un angle ($\mu$) de sorte qu'aucun autoblocage n'apparaît entre l'amortisseur (100) et l'élément d'accouplement (110, 113).

4. Dispositif de démarrage (10) selon la revendication 3, **caractérisé en ce que** l'angle ($\mu$) est au moins égal à 4,6° et jusqu'à 27,5°, de préférence compris entre 14° et 27,5° ou de préférence compris entre 4,6° et 14°.

5. Dispositif de démarrage (10) selon l'une des revendications précédentes, **caractérisé en ce qu'**un amortisseur (100, 140) est agencé sur une surface de transmission de puissance (125, 128) de telle sorte que l'amortisseur (100, 140) vient en butée contre une surface extérieure cylindrique (146) de la couronne ou contre une surface intérieure cylindrique (143) du palier de couronne.

6. Dispositif de démarrage (10) selon l'une des revendications précédentes, **caractérisé en ce qu'**un amortisseur (100, 140) est maintenu à distance d'un interstice (136) par une entretoise d'écartement (153).

7. Dispositif de démarrage (10) selon l'une des revendications précédentes, **caractérisé en ce que** l'amortisseur (100) est relié d'un seul tenant à un amortisseur supplémentaire (140) par l'intermédiaire d'une partie de liaison (150).

8. Dispositif de démarrage (10) selon la revendication 7, **caractérisé en ce que** la partie de liaison (150) s'étend dans un interstice (130, 136) entre la couronne (95) et le palier de couronne (103).

9. Dispositif de démarrage (10) selon la revendication 8, **caractérisé en ce que** la partie de liaison (150) est agencée de manière excentrée dans l'interstice (130, 136) et/ou est réalisée de manière non symétrique.

10. Dispositif de démarrage (10) selon la revendication 7, 8 ou 9, **caractérisé en ce que** la partie de liaison (150) supporte l'amortisseur (100, 140).

11. Dispositif de démarrage (10) selon l'une des revendications 7 à 10, **caractérisé en ce que** l'amortisseur (100) et l'amortisseur supplémentaire (140) s'étendent entre deux éléments d'accouplement (110) de la couronne (95) ou du palier de couronne (103).

12. Dispositif de démarrage (10) selon l'une des revendications précédentes, **caractérisé en ce que** l'amortisseur (100) vient en butée contre la surface (146, 143) espacée de l'interstice (130, 136) et une cavité (157, 155) est située entre la surface (143, 146) opposée à l'interstice (130, 136) et l'amortisseur (110).

13. Dispositif de démarrage (10) selon l'une des revendications précédentes, **caractérisé en ce que** l'amortisseur (100) se trouve entre la couronne (95) et le palier de couronne (103) dans une direction axiale ou radiale.

Fig. 1

Fig. 2

Fig. 3

153

153

150

153

128

103

125

113

α

95

140

157

α

133

110

140

100

136

113

130

_Fig.5_

113

140

160

130

110

100

125

150

_Fig.4_

_Fig. 3a_

136

113

140    150   136    100

B

_Fig. 6_

136

140    100

B

_Fig. 7_

Fig. 8a

Fig. 8b

Fig. 9a

Fig. 9b

Fig. 9c

Fig. 10a

140    150    100

153

Fig. 10b

150

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3225957 A1
- KR 20110072188 A
- FR 2829812 A1
- EP 1357287 A2
- US 5905309 A
- FR 2803345 A1